Europäisches Patentamt

European Patent Office

Office européen des brevets

(19)

(11) Publication number: **0 052 824**
**A2**

(12) **EUROPEAN PATENT APPLICATION**

(21) Application number: **81109556.1**

(22) Date of filing: **06.11.81**

(51) Int. Cl.³: **B 23 Q 3/155**

(30) Priority: **21.11.80 JP 164806/80**

(43) Date of publication of application:
**02.06.82 Bulletin 82/22**

(84) Designated Contracting States:
**AT BE CH DE FR GB IT LI LU NL SE**

(71) Applicant: **TOYODA KOKI KABUSHIKI KAISHA**
**1-1, Asahi-machi**
**Kariya-shi Aichi-ken(JP)**

(72) Inventor: **Tomita, Tamaki**
**3, Kuribayashi Myodaiji-cho**
**Okazaki-shi Aichi-ken(JP)**

(72) Inventor: **Munekata, Kenichi**
**63-6, Midorigaoka Higashisakai-cho**
**Kariya-shi Aichi-ken(JP)**

(72) Inventor: **Ohkoshi, Fumihiko**
**60, Shinden Minowa-cho**
**Anjo-shi Aichi-ken(JP)**

(72) Inventor: **Hasegawa, Toshifumi**
**2-52, Shintomi-cho**
**Kariya-shi Aichi-ken(JP)**

(74) Representative: **Wächtershäuser, Günter, Dr.**
**Gewürzmühlstrasse 5**
**D-8000 München 22(DE)**

(54) Machine tool with automatic tool change function.

(57) In a machine tool with an automatic tool change function, a rotatable tool spindle carries a movable key engageable with either of a pair of key-ways formed on a tool. A tool changing arm, serving as a tool support device, friction-rotatably supports at least one tool for selectively inserting and removing the same into and from the tool spindle. When a tool change operation is to be performed, rotation of the spindle is changed into a predetermined speed permitting key-engagement. A first confirming device is provided for confirming that the spindle is reached at a first predetermined position during rotation thereof. The tool change arm is operated to remove the tool from the spindle in response to the first confirming device. A second confirming device is provided for confirming that the spindle is reached at a second predetermined position during rotation thereof. Prior to insertion of the tool into the spindle, the movable key is withdrawn, and in response to the second confirming device the movable key is moved outwardly into engagement with predetermined one of the key-ways.

TITLE OF THE INVENTION:

MACHINE TOOL WITH AUTOMATIC
TOOL CHANGE FUNCTION

## BACKGROUND OF THE INVENTION

Field of the Invention:

The present invention relates to a machine tool with an automatic tool change function, which is capable of making engagement between a key of a tool spindle and a key-way of a tool or a tool holder without stopping rotation of the spindle.

Description of the Prior Art:

Conventionally, in order to make engagement between a key of a tool spindle and a key-way of a tool, the spindle is stopped at a predetermined angular position, which results in a longer tool change operation.

-2-

Accordingly, it is extremely effective for shortening a tool change time to perform a tool change operation without stopping the spindle at the predetermined angular position. On the other hand, the tool is usually provided with two key-ways at the diametrically opposite positions, and thus it is necessary to engage the key with predetermined one of the two key-ways for maintaining a constant taper engagement between the spindle and the tool.

## SUMMARY OF THE INVENTION

It is an object of the present invention to provide an improved machine tool with an automatic tool change function, wherein a key engagement is performed between a key-way of a tool and a movable key of the spindle without stopping rotation of a spindle.

Another object of the present invention is to provide an improved machine tool with an automatic tool change function of the character set forth above, wherein a taper engagement between the spindle and the tool is maintained constant by engaging the movable key with predetermined one of two key-ways of the tool.

Briefly, according to the present invention, these and other objects are achieved by providing a machine tool with an automatic tool change function having a tool spindle rotatably supported and capable of receiving a tool at one end thereof, as mentioned below. Tool support means is provided for rotatably supporting at least one tool to selectively insert and remove the same into and from the tool spindle. A movable key is movably guided in the spindle and having a width smaller than that of a pair of key-ways formed on the tool. Control means is responsive to a tool change command for rotating the spindle at a predetermined speed permitting key-engagement. Operating means causes relative movement between the tool support means and the spindle for a tool change operation with the spindle being rotated at the predetermined speed. First means is provided for confirming that

0052824

-4-

the spindle is reached at a first predetermined position during rotation thereof at the predetermined speed. Second means is provided for confirming that the spindle is reached at a second predetermined position during rotation thereof at the predetermined speed. Third means included in the operating means is responsive to the first confirming means for causing relative movement between the tool support means and the spindle in a direction parallel to the axis of the spindle to remove the tool from the spindle. Fourth means is provided for withdrawing the movable key prior to insertion of the tool into the spindle and for moving the movable key outwardly into engagement with predetermined one of the key-ways in response to the second confirming means.

BRIEF DESCRIPTION OF THE DRAWINGS

The foregoing and other objects and many of the attendant advantages of the present invention will be readily appreciated as the same becomes better understood by reference to the following detailed description, when considered in connection with the accompanying drawings, in which:

FIGURE 1 is a front view showing a spindle head and an automatic tool change apparatus according to the present invention;

FIGURE 2 is an enlarged sectional view taken along the lines II-II in FIGURE 1;

FIGURE 3 is an enlarged sectional view taken along the lines III-III in FIGURE 2;

FIGURE 4 is an enlarged sectional view taken along the lines IV-IV in FIGURE 1;

FIGURE 5 is an enlarged fragmentary sectional view of a spindle head showing a movable key and a key engagement confirming device;

FIGURE 6 is a sectional view taken along the lines VI-VI in FIGURE 5; and

FIGURE 7 is a block diagram showing an electric control circuit for controlling a spindle drive motor.

-6-

## DETAILED DESCRIPTION OF THE PREFERRED EMBODIMENT

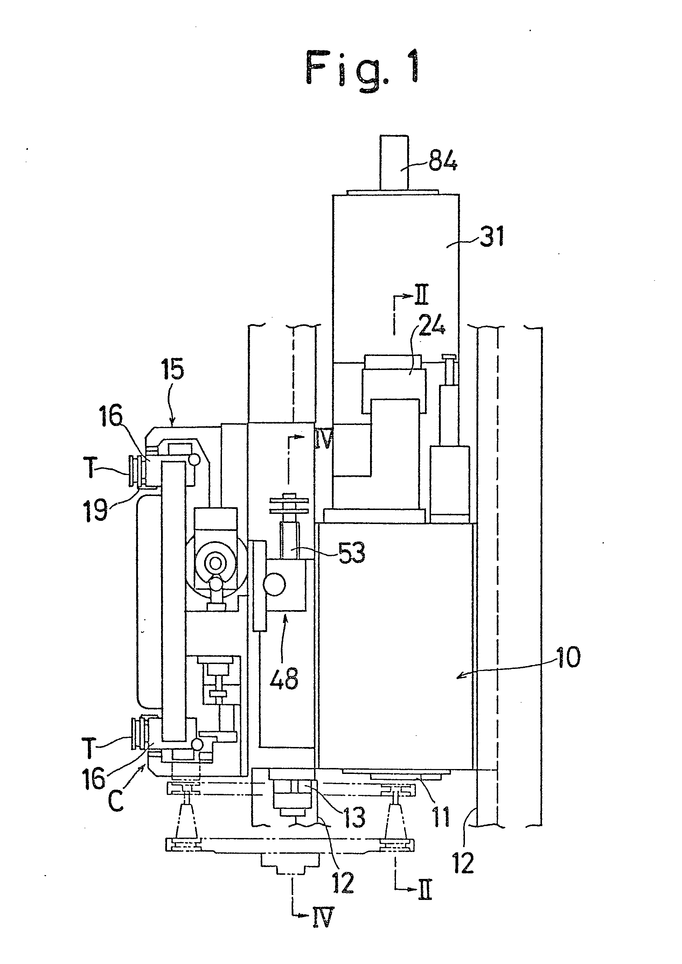

Referring now to the drawings, wherein like reference numerals or characters refer to identical or corresponding parts throughout the several views, and more particularly to FIGURE 1, there is shown a spindle head 10 which is guided on guide ways 12 and 12 formed on an upstanding column, not shown, for a vertical sliding movement and rotatably supports a vertical spindle 11. FIGURE 1 shows an upper end position of the spindle head 10, where a tool change operation is performed. A reference numeral 13 indicates a tool change arm having tool grippers at opposite ends thereof to serve as a tool support device. The tool change arm 13 is movable in a direction parallel to the axis of the spindle 11 and rotatable about a vertical axis. A tool magazine 15 is rotatably supported and carries a plurality of tool sockets 16 on the periphery thereof. Each tool socket 16 removably supports a tool T, and is indexable to a tool change position C, where the indexed tool socket 16 is pivotable from a horizontal position shown in solid lines to a vertical position shown in phantom lines for enabling the tool change arm 13 to change the tools between the vertically oriented tool socket 16 and the spindle 11. Each tool socket 16 on the tool magazine 15 is provided with a detent pin 19 engageable with one of two key-ways 18 formed on each tool T with some play to restrict the direction of the tool T received in the tool socket 16 within a predetermined angular extent.

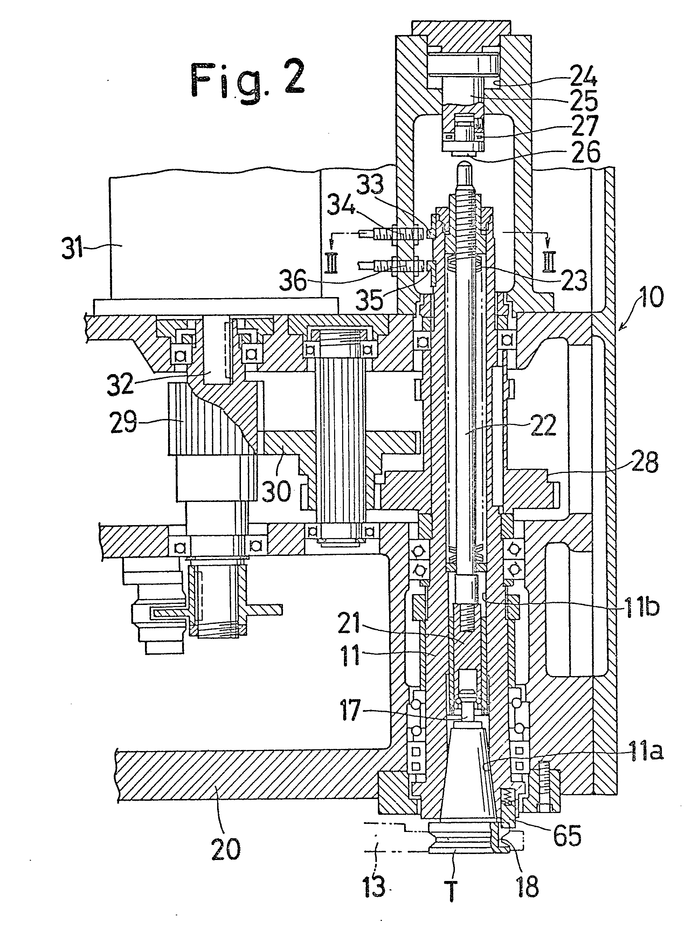

Referring to FIGURE 2 showing a detailed construction of the spindle head 10, the spindle 11 rotatably supported by a housing 20 is formed with a tool receiving tapered bore 11a at its lower end and a through bore 11b connected to the tapered bore 11a. Within the through bore 11b, there are received a snap member 21 engageable with a pull stud 17 extended from one end of a tool T received in the tapered bore 11a, a drawing rod 22 connected at its forward end with the snap member 21 and projected at its rear end from the rear end of the spindle 11, and a set of washer springs 23 drawing

-8-

the drawing rod 22 in the rearward direction relative to the spindle 11, in such a manner as to constitute a clamp device for clamping the tool T relative to the spindle 11. In face to face relationship with the rear end of the drawing rod 22, there is disposed an unclamping cylinder 24 whose piston rod 25 rotatably supports an abutting member 26 at its forward end through a thrust bearing 27. When the drawing rod 22 is urged against the springs 23 through the abutting member 26, the tool T in the spindle 11 is unclamped. A gear member 28 is secured on the spindle 11 and is connected through a shiftable transmission gear member 30 and a drive gear 29 to an output shaft 32 of a spindle drive motor 31 which is mounted on the upper end of the spindle head 10. The drive motor 31 is driven at a speed depending upon a rotary speed command applied from a numerical control device NC and also at a predetermined low speed in response to a tool change command, as described later in more detail.

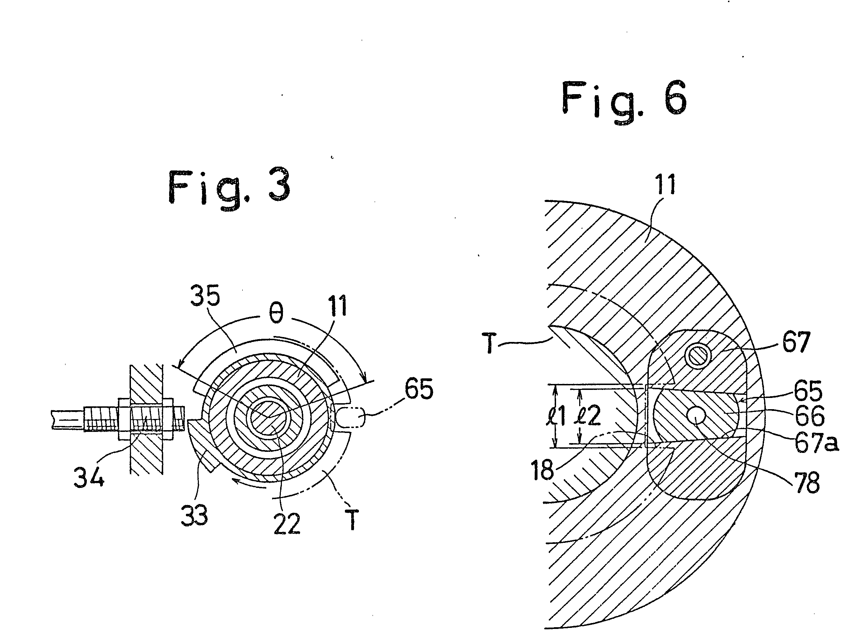

At the rear end of the soindle 11 is secured a dog member 33 having a projection with a predetermined angular distance, as shown in FIGURES 2 and 3. A proximity switch 34 responsive to the projection of the dog member 33 is provided on the spindle head 10. When the proximity switch 34 is changed from ON to OFF state, it is confirmed that the spindle 11 is reached to a predetermined angular position during rotation thereof.

A dog member 35 having a projection with a predetermined angular distance θ, where θ is smaller than 180 degrees, is also secured at the rear end of the spindle in juxtaposed relationship with the dog member 33. A proximity switch 36 responsive to the projection of the dog member 35 is provided on the spindle head 10 so as to detect an angular range of the spindle 11.

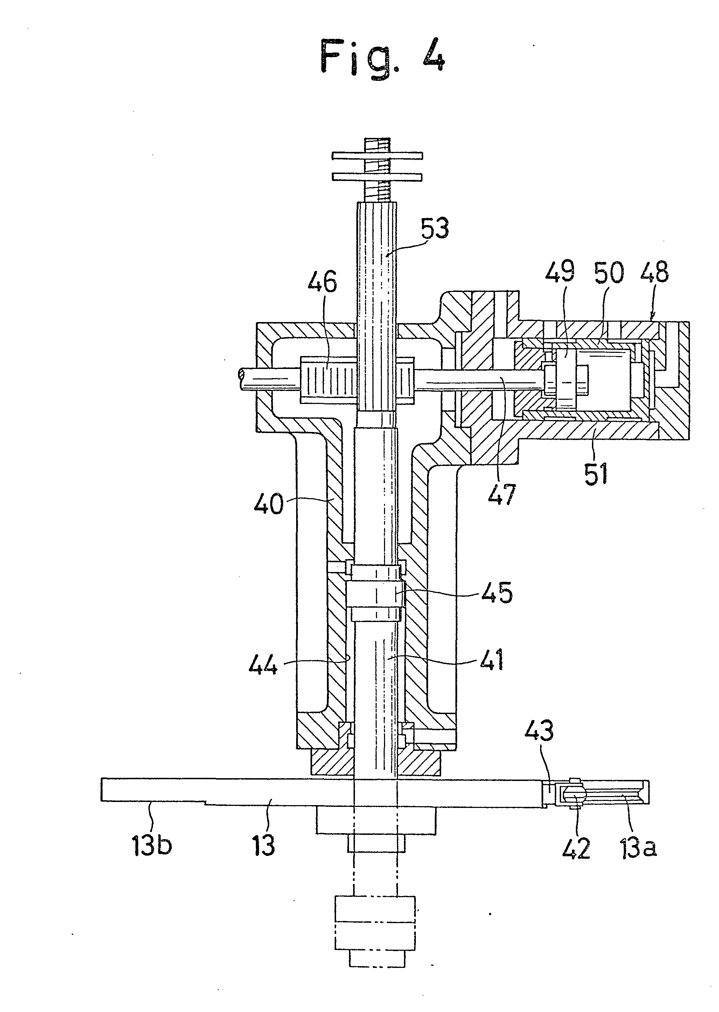

Referring to FIGURE 4 showing a detailed construction of the tool change arm 13 and a drive device therefor, a support shaft 41 is rotatably and axially movably supported by a support body 40. The support shaft 41 has secured at its lower end the tool change arm 13 which is formed at its opposite ends with a pair of circular tool grippers

-10-

13a and 13b symmetric with respect to the axis of the support shaft 41 and engageable with a flange portion 37 of each tool T. In order to prevent a tool T from falling from the tool gripper 13a or 13b, a plunger 43 rotatably supporting an engaging roller 42 at its one end is guided at each end of the tool change arm 13 to be movable in a substantially radial direction and is urged outwardly by a spring, not shown. This spring is calibrated in such a manner that when the tool change arm 13 is rotated to grip or release the tools held in the spindle 11 and the tool socket 16 in its vertical position, the plunger 43 is moved inwardly to allow such grip or release of the tool, and when the tools are held by the tool grippers 13a and 13b of the tool change arm 13, the engaging roller 42 is urged toward the tool T to prevent the tool from falling but to allow frictional rotation of the tool.

The support shaft 41 is formed at its intermediate portion with a piston 45 slidably received in a cylinder 44 formed in the support body 40. Selective supply of pressurized fluid into upper and lower cylinder chambers of the cylinder 44 causes the tool change arm 13 to be vertically moved to insert and withdraw the tools T. The support shaft 41 is formed at its upper end with an elongated gear 53 in meshing engagement with a rack bar 46. The rack bar 46 is connected through a piston rod 47 with a piston 49 of a hydraulic cylinder 48 capable of positioning at four different positions. The piston 49 is slidably received in an inner cylinder 50 which is, in turn, slidably received in an outer cylinder 51. When the inner cylinder 50 is moved relative to the outer cylinder 51 with relative movement being restrained between the piston 49 and the inner cylinder 50, the tool change arm 13 is rotated between a ready position shown in solid lines in FIGURE 1 and a tool grip position shown in phantom lines to grasp or release the tools. When the piston 49 is moved relative to the inner cylinder 50 which is restrained from movement relative to the outer cylinder 51 at its right or left end position, the tool change arm 13 is rotated 180 degrees to change the tools.

-12-

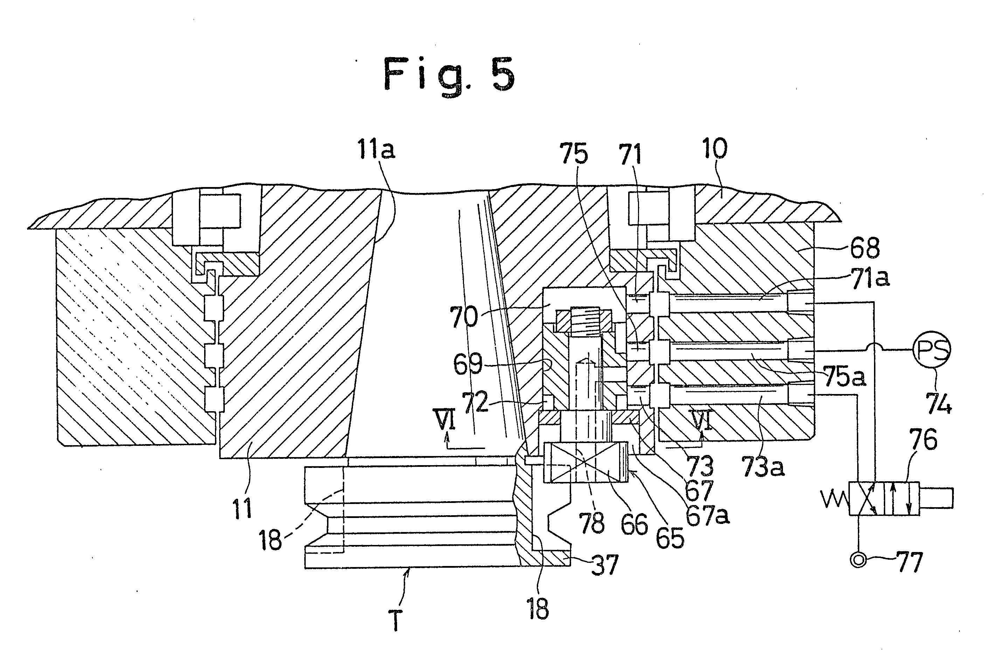

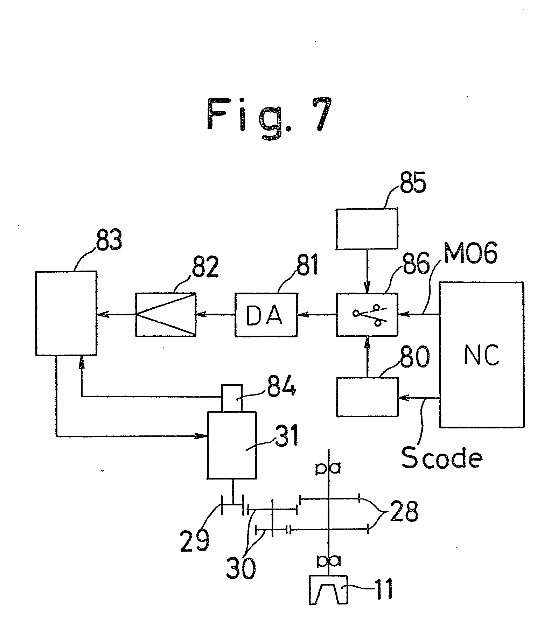

Referring now to FIGURES 5 and 6, a movable key 65, engageable with each key-way 18 of a tool T to be inserted into the spindle 11, is slidably received in a bore 69 formed at the front end of the spindle 11. The movable key 65 is provided at its front end with a flattened engaging head 66 whose width ($l_2$) is narrower than that ($l_1$) of the key-way 18. The engaging head 66 is projected beyond a plate member 67 secured to the front end of the spindle 11. The plate member 67 is formed with an engaging recess 67a engaged with the engaging head 66 of the movable key 65 to prevent rotation of the movable key 65 and to transmit rotational force to the movable member 65 from the spindle 11. The end surface of the plate member 67 is engageable with the shoulder portion of the movable key 65 to restrict the forward movement of the movable key 65. A rear chamber 70 formed between the movable key 65 and the bottom end of the bore 69 is communicated with a solenoid valve 76 through passages 71 and 71a formed respectively on the spindle 11 and a cover plate 68. A front chamber 72 formed between the plate member 67 and the movable key 65 is communicated with the solenoid valve 76 through passages 73 and 73a formed respectively on the spindle 11 and the cover plate 68. The solenoid valve 76 is connected to a pressurized air supply source 77. The rear chamber 70 is also communicated with a pressure switch 74 through passages 75 and 75a formed respectively on the spindle 11 and the cover plate 68, when the movable key 65 is in its projected position, as shown in FIGURE 5. The movable key 65 is formed with a passage 78 whose one end is communicated with the outer periphery of the movable key 65. The other end of the passage 78 is open to the atmosphere at the front end of the movable key 65. When the movable key 65 is moved inwardly by pressurized air supplied into the front chamber 72, the pressure switch 74 is communicated with the passage 78 and thus with the atmosphere. When the movable key 65 is moved by pressurized air supplied into the rear chamber 70 into a position shown in FIGURE 5 as a result of engagement between the key-way 18 of the

-14-

tool T and the movable key 65, communication between the passages 75 and 78 is shut off, but communication between the passages 71 and 75 is established, whereby pressurized air is applied to the pressure switch 74 to confirm engagement between the key-way 18 of the tool T and the movable key 65.

Referring now to FIGURE 7, the spindle drive motor 31 is controlled to be rotated at a speed depending upon any of the various tools inserted in the spindle 11. When a rotational speed command (S-code) is applied from a numerical control device NC to a register 80, the speed command is converted by a digital to analog converter 81 into a corresponding voltage which is, in turn, applied as a speed command voltage to a motor drive circuit 83 through an amplifier 82. The actual rotational speed of the drive motor 31 is detected by a speed detector 84, and the detected actual speed is feedbacked to the motor drive circuit 83. Accordingly, the rotational speed of the drive motor 31 is controlled in such a manner that the detected

-15-

actual rotational speed becomes equal to the commanded rotational speed. When a d.c. motor is used as the drive motor 31, a thyristor Leonard device is used as the motor drive circuit 83. When an a.c. motor is used as the drive motor 31, a variable frequency inverter device is used as the motor drive circuit 83.

In order to perform a tool change operation, it is necessary to reduce a rotational speed of the spindle 11 from a speed depending upon any of various tools to a predetermined low speed such as several tens rpm. A setting device 85 for setting such predetermined low speed command is connected to the digital to analog converter 81 through a switching circuit 86. When the numerical control device NC generates a tool change command M06, the switching circuit 86 applies, instead of a rotational speed command set in the register 80, the predetermined low speed command set in the setting device 85 to the digital to analog converter 81. As a result, the motor drive circuit 83 controls the rotation of the motor 31 so as to rotate

-16-

the spindle 11 at the set low speed. When engagement between the key-way 18 of the tool T and the movable key 65 is confirmed by the pressure switch 74, the switching circuit 86 is changed over to cause a rotational speed command set in the register 80 to be applied to the digital to analog converter 81, whereby the spindle 11 is rotated at a speed depending upon a tool T inserted therein.

It is to be noted here that the toolT grasped by the tool gripper 13a or 13b of the tool change arm 13 can be forcibly rotated, but is not rotated together with the movable key 65 abutting the end surface of the flange portion 37 of the tool T, since the tool T is gripped by the tool gripper 13a or 13b with a frictional force greater than that caused between the tool T and the movable key 65 abutting the end surface of the flange portion 37 of the tool T. The tool T is rotated only when engagement between the key-way 18 of the tool T and the movable key 65 is established.

The operation of the machine tool with an automatic tool change function according to the

-17-

present invention will be now described. The spindle 11 is usually rotated within a wide range from 20 to 3,000 rpm, and the shiftable gear 30 is operated at the intermediate of such range to change the reduction gear ratio. For example, the shiftable gear 30 is shifted to a low speed range when the rotational speed is lower than 1,100 rpm, and to a high speed range when the rotational speed is higher than 1,100 rpm. Accordingly, frequency in use at the low speed range is higher in usual machining operations, so that the shiftable gear 30 is hereunder assumed to be shifted to the low speed range for convenience of description.

Upon completion of a machining operation by a predetermined tool, the spindle 11 continues to rotate at a high speed depending upon a rotational speed command set in the register 80. The spindle head 10 is moved upward to its upper end position for a tool change operation. When the tool change command M06 is generated from the numerical control device NC, the switching circuit 86 is changed over to apply a rotational speed command set in

-18-

the setting device 85. Accordingly, the drive motor 31 is applied with an electrical braking torque so as to rotate the spindle 11 at a predetermined low speed suitable for key engagement. Thereafter, the tool change arm 13 is rotated to grip by the tool grippers 13a and 13b thereof the tools T held in the vertically oriented tool socket 16 and the spindle 11. The unclamping cylinder 24 is subsequently operated to move the drawing rod 22 downwardly against the springs 23, thereby unclamping the tool T held in the spindle 11. When the spindle 11 is rotated to a predetermined position shown in FIGURE 3, where the proximity switch 34 is changed from OFF to ON state, pressurized fluid is supplied to the upper chamber of the cylinder 44 to move the tool change arm 13 downwardly, thereby withdrawing the tools T from the spindle 11 and the tool socket 16. The key-way 18 of the tool T is disengaged from the movable key 65 of the spindle 11 by such withdrawal of the tool T from the spindle 11, whereby rotation of the tool T withdrawn from the spindle 11 is immediately stopped by the grip force of the tool change arm 13. Accordingly, the key-way 18 of the tool T grasped by the tool change arm 13 is maintained at a sugstantially predetermined angular position.

When the tool change arm 13 is moved to its lower end position, the piston 49 is moved, with movement of the inner cylinder 50 being restrained, to ratate the tool change arm 13 by 180 degrees. Subsequently, pressurized fluid is supplied to the lower chamber of the cylinder 44 to move the tool change arm 13 upwardly, whereby the tool T withdrawn from the tool socket 16 is inserted into the tapered bore 11a of the spindle 11, while the tool withdrawn from the spindle 11 is inserted into the tool socket 16. In this manner, since the tool T is withdrawn from the spindle 11 at the timing when the spindle 11 is rotated into the predetermined angular position, the tool T is returned to the tool socket 16 in such a manner that the key-way 18 of the tool T is engaged with the detent pin 19 of the tool socket 16 with some play.

Prior to the insertion of the tool T into the tapered bore 11a of the spindle 11, the solenoid valve 76 is changed over to supply pressurized air into the front chamber 72, thereby retracting the movable key 65. Under these conditions, when the tool T is inserted into the spindle 11, the flange portion of the tool T faces the movable key 65 being rotated together with the spindle 11. When the movable key 65 passes over one of the key-ways 18 being prohibited to engage with the movable key 65, the proximity switch 36 is actuated by the dog 35 to change over the solenoid valve 76 into a position shown in FIGURE 5, whereby pressurized air is supplied into the rear chamber 70 to move the movable key 65 outwardly into sliding engagement with the flange portion of the tool T. When the movable key 65 is rotated into face to face relationship with the other key-way 18, the movable key 65 is moved outwardly into engagement with the other key-way 18 of the tool T by the force of pressurized air. Accordingly, rotation of the spindle 11 is transmitted through the movable key 65 to the tool T to

-21-

forcibly rotate the same within the tool gripper 13a of the tool change arm 13.

Simultaneously with this, the passage 75 is disconnected from the passage 78, but connected with the passage 71, whereby pressurized air is supplied to the pressure switch 74 to actuate the same. With the pressure switch 74 being actuated and the tool change arm 13 being moved to its upward end position, key engagement is confirmed. The confirmation of key engagement causes the unclamping cylinder 24 to be deactivated to thereby release the urging force of the drawing rod 22. Accordingly, the tool T is clamped on the spindle 11 by means of the springs 23. Subsequently, the tool change arm 13 is rotated back to its ready position, thereby completing a tool change operation. With the tool change operation being completed, the tool change command is cancelled so that the switching circuit 86 renders a command signal from the setting device 85 inoperative and a cammand signal from the register 80 operative. The spindle 11 is thus rotated at a high speed depending upon a newly inserted tool for a next machining operation.

In the above-described embodiment, the tool change arm is used as a tool support device. However, the present invention can be applied to a machine tool wherein tools are directly changed between the tool magazine and the spindle. In such a case, the tool magazine is used as the tool support device.

As described above, according to the present invention, a tool change operation is carried out while the spindle is rotated. Therefore, there is no need to provide a device to stop the spindle at a predetermined angular position, as in the conventional apparatus, whereby a tool change time is considerably shortened, resulting in increase of the machining efficiency.

Furthermore, according to the present invention, a tool is removed from the rotating spindle in response to a signal confirming the predetermined angular position of the spindle, whereby the key-way of a tool returned from the spindle to the tool magazine is maintained at a substan-

-23-

tially predetermined angular position. These arrangement and control are particularly effective for large sized tools.

Furthermore, according to the present invention, a tool is removed from the rotating spindle in response to a signal confirming one predetermined angular position of the spindle, and for insertion of the tool into the spindle the movable key is moved outwardly in response to a signal confirming another predetermined angular position of the spindle, whereby the movable key is always engaged with predetermined one of the key-ways of the tool. Accordingly, a taper engagement between the spindle and the tool is maintained constant, resulting in increase in machining accuracy.

Obviously, numerous modifications and variation of the present invention are possible in light of the above teachings. It is to be understood, therefore, that within the scope of the appended claims, the invention may be practiced otherwise than as specifically described herein.

0052824

-24-

WHAT IS CLAIMED IS:

1. In a machine tool with an automatic tool change function having a tool spindle rotatably supported and capable of receiving a tool at one end thereof, the improvement comprising:

tool support means for rotatably supporting at least one tool to selectively insert and remove the same into and from said spindle;

a movable key movably guided in said spindle and having a width smaller than that of a pair of key-ways formed on said tool;

control means responsive to a tool change command for rotating said spindle at a predetermined speed permitting key-engagement;

operating means for causing relative movement between said tool support means and said spindle for a tool change operation with said spindle being rotated at the predetermined speed;

first means for confirming that said spindle is reached at a first predetermined position during rotation thereof at the predetermined speed;

second means for confirming that said spindle is reached at a second predetermined position during rotation thereof at the predetermined speed;

third means included in said operating means and responsive to said first confirming means for causing relative movement between said tool support means and said spindle in a direction parallel to the axis of said spindle to remove said tool from said spindle; and

fourth means for withdrawing said movable key prior to insertion of said tool into said spindle and for moving said movable key outwardly into engagement with predetermined one of said key-ways in response to said second confirming means.

2. A machine tool as claimed in Claim 1, further comprising a tool magazine for removably supporting a plurality of tools, and wherein said tool support means comprises a tool change arm rotatable and movable in a direction parallel to the axis of said spindle, said tool change arm being provided with at least one tool gripper capable of rotatably supporting said tool.

3. A machine tool as claimed in Claim 1 or 2, wherein said movable key is slidably received in said spindle in such a manner as to form front and rear chambers; and wherein said fourth means comprises:

a pressurized air supply source; and

a solenoid valve provided between said front and rear chambers and said pressurized air supply source to selectively supply pressurized air into said front and rear chambers to thereby withdraw and advance said movable key relative to said spindle.

4. A machine tool as claimed in Claim 3, further comprising a pressure switch actuatable when said movable key is engaged with said predetermined one of key-ways.

# Fig. 1

# Fig. 2

# Fig. 3

# Fig. 6

# Fig. 4

# Fig. 5

# Fig. 7